# EUROPEAN PATENT SPECIFICATION

(11) **EP 3 865 327 B1**
(45) Date of publication and mention of the grant of the patent: **14.12.2022**
(21) Application number: 20190251.7
(22) Date of filing: 10.08.2020
(51) Int. Cl.: B60K 1/00

(54) **BATTERY STORAGE DEVICE FOR ELECTRIC VEHICLE AND ELECTRIC VEHICLE**
BATTERIESPEICHERVORRICHTUNG FÜR ELEKTROFAHRZEUG SOWIE ELEKTROFAHRZEUG
DISPOSITIF DE STOCKAGE DE BATTERIE POUR VÉHICULE ÉLECTRIQUE ET VÉHICULE ÉLECTRIQUE

(30) Priority: 13.02.2020 KR 20200017839
(43) Date of publication of application: 18.08.2021
(73) Proprietor: HYUNDAI MOTOR COMPANY, Seoul 06797 (KR); Kia Corporation, Seocho-gu Seoul 06797 (KR)
(72) Inventor: Kim, Jin Won, Gyeonggi-do 18280 (KR); Park, Ki Bong, Gyeonggi-do 18280 (KR); Yang, Young Tae, Gyeonggi-do 18280 (KR); Jung, Se Hoon, Gyeonggi-do 18280 (KR); Kim, Jong Chan, Gyeonggi-do 18280 (KR); Jung, Jae Hwan, Gyeonggi-do 18280 (KR); Choi, Ji Ho, Gyeonggi-do 18280 (KR); Yang, Dong Su, Gyeonggi-do 18280 (KR); Choi, Jun Seok, Gyeonggi-do 18280 (KR)
(74) Representative: Hoffmann Eitle

(56) References cited:
- FR-A3- 2 949 096
- JP-A- 2008 141 945
- US-A1- 2012 138 260
- US-B2- 8 297 387

## Description

### Field

The present invention relates to an electric vehicle having a battery storage device , in which a battery module is installed therein and a cooling device is provided to cool the battery module.

### Description of the Related Art

Recently, due to environmental problems, such as high oil prices and the like, interest in environmentally friendly vehicles is increasing. Thus, various electric vehicles that are driven using electric energy are being developed.

The electric vehicles are classified into a battery powered EV, a fuel cell EV that uses a fuel cell to power a motor, and a hybrid EV that uses both a motor and an engine.

Particularly, the electric vehicle is provided with a battery module to store electric energy. The battery module accommodates a plurality of battery cell units in a battery casing. Since such a battery casing is large in volume and weight, it is important to secure a mounting space in a vehicle body so as to mount the battery casing on the vehicle body. In addition, as the battery module generates high-temperature heat during driving, it is required to cool the battery module. However, the conventional battery casing is not optimally designed considering the mounting space of the vehicle body and the cooling of the battery module.

US 8,297,387 B2 discloses an electric vehicle having a duct having one end joint to an air conditioning unit and the other end joint to a power unit and serving as an airstream flow path via which cold air streams are guided from an air condition unit to the power unit. The description provided above as a related art of the present invention is only for helping understanding the background of the present invention and should not be construed as being included in the related art known by those skilled in the art.

### SUMMARY

The present invention has been made in order to solve the above-mentioned problems in the prior art and an objective of the present invention is to provide an electric vehicle having a battery storage device , in which a battery casing is provided under a vehicle floor to secure an indoor space, and a battery module is cooled using indoor air, thus simplifying a cooling structure and reducing a manufacturing cost.

In order to achieve the object, the present invention provides an electric vehicle according to claim 1. Preferred embodiments of the invention are defined in the dependent claims.

A plurality of seats may be provided on the vehicle floor, , and the discharge duct may extend under or on a side of a rear seat to discharge the air used to cool the battery module.

The intake duct may be disposed adjacent to an air conditioning duct that discharges conditioned air to the front seat, so that the intake duct may suction the conditioned air.

The discharge duct may extend under the rear seat to discharge the air used to cool the battery module, and may include a first discharge path communicates with the air outlet and extends under the rear seat to discharge the air to an inside of the vehicle, and a second discharge path that branches off from the first discharge path and extends outdoors to discharge the air to an outside of the vehicle, with a regulating valve provided on a junction of the first discharge path and the second discharge path.

The discharge duct may include a discharge port that is formed to discharge the air used to cool the battery module, the discharge port being formed under or on the side of the rear seat to extend rearwards.

The discharge path may be formed in the vehicle floor under or on the side of the rear seat to communicate with an outdoor side, and, as the discharge duct may extend to communicate with the discharge path, the air used to cool the battery module and discharged through the discharge port may be discharged through the discharge path to the outside.

A grill portion having a plurality of holes may be provided in the discharge duct to be installed in the discharge port, the holes being formed by a plurality of ribs that cross the discharge port vertically and horizontally.

The plurality of seats may be installed on the vehicle floor, the casing may be installed under the vehicle floor, and an inlet portion that matches with the air inlet of the casing and is open vertically, and an outlet portion that matches with the air outlet of the casing and is open vertically may be formed.

A first watertight pad may be provided in the upper portion of the vehicle floor to enclose a circumstance of the inlet portion, and the intake duct may be mounted so that the first watertight pad is interposed between the intake duct and the inlet portion of the vehicle floor, thus allowing a gap between the intake duct and the vehicle floor to be sealed by the first watertight pad.

A second watertight pad may be provided in the upper portion of the vehicle floor to enclose a circumstance of the outlet portion, and the discharge duct may be mounted so that the second watertight pad is interposed between the discharge duct and the outlet portion of the vehicle floor, thus allowing a gap between the discharge duct and the vehicle floor to be sealed by the second watertight pad.

A third watertight pad may be provided on the casing to enclose a circumstance of the air inlet, so that a gap between the air inlet of the casing and the vehicle floor may be sealed by a third watertight pad when the casing is mounted in the lower portion of the vehicle floor.

A fourth watertight pad may be provided on the casing to enclose a circumstance of the air outlet, so that a gap between the air outlet of the casing and the vehicle floor may be sealed by the fourth watertight pad, when the casing is mounted in the lower portion of the vehicle floor.

The intake duct may extend to suction the indoor air under the front seat, and the discharge duct may extend to discharge the air used to cool the battery module under the rear seat, so that, when an extension portion is formed to extend along the vehicle floor, a shock absorbing pad may be provided on the extension portion to absorb shock and vibration.

The shock absorbing pad may be provided on each of inner and outer sides of the extension portion to extend in a longitudinal direction.

As described above, the battery storage device for the electric vehicle is configured such that the battery casing is provided under the vehicle floor to secure the indoor space, and the battery module is cooled using the indoor air, thus simplifying the cooling structure and reducing the manufacturing cost.

### BRIEF DESCRIPTION OF THE DRAWINGS

The above and other objectives, features, and other advantages of the present invention will be more clearly understood from the following detailed description when taken in conjunction with the accompanying drawings, in which:
FIGS. 1 and 2 are diagrams illustrating a battery storage device for an electric vehicle according to an embodiment of the present invention; and
FIGS. 3, 4, 5, 6, 7, 8, 9, 10, and 11 are diagrams illustrating the battery storage device for the electric vehicle of FIG. 1.

### DETAILED DESCRIPTION

Hereinafter, a battery storage device for an electric vehicle according to an exemplary embodiment of the present invention will be described with reference to the accompanying drawings.

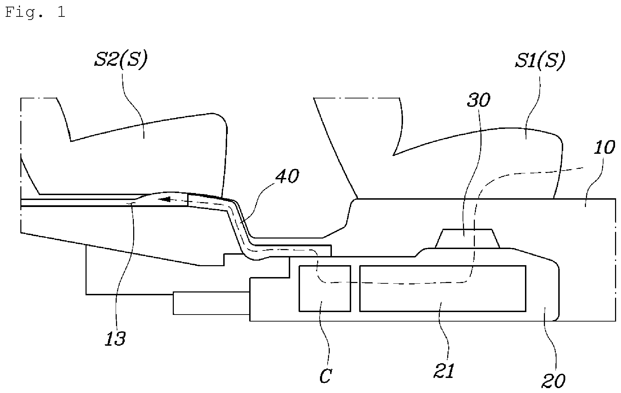

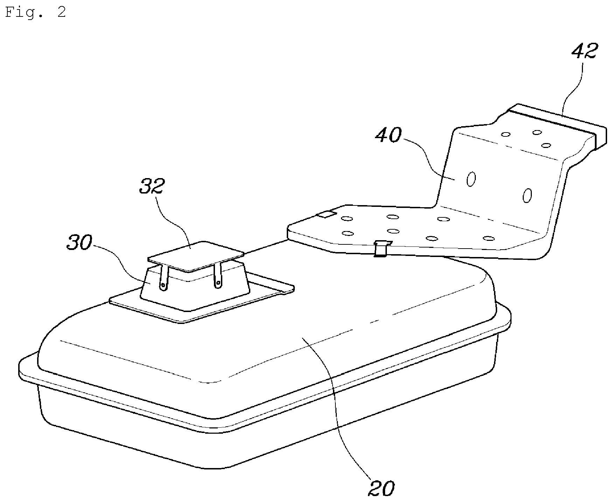

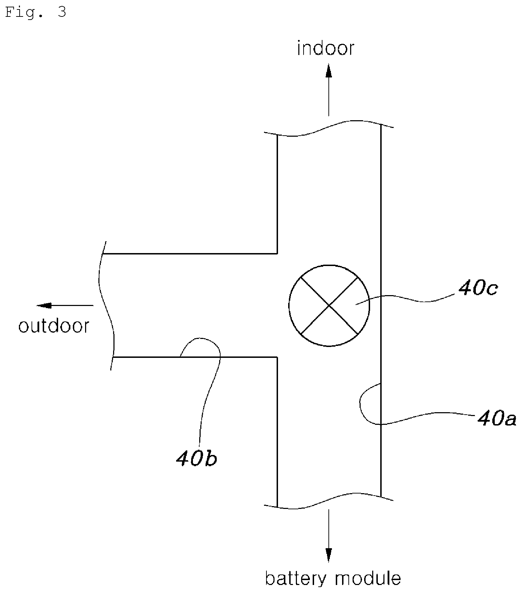

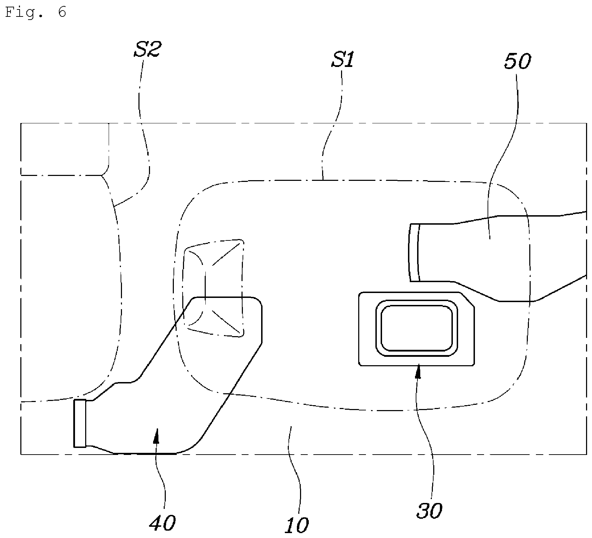

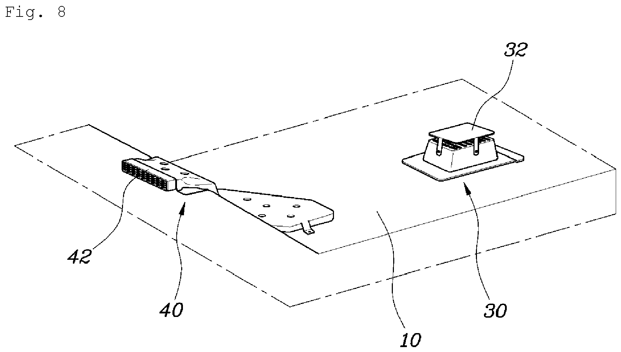

FIGS. 1 and 2 are diagrams illustrating a battery storage device for an electric vehicle according to an embodiment of the present invention, and FIGS. 3 to 11 are diagrams illustrating the battery storage device for the electric vehicle of FIG. 1.

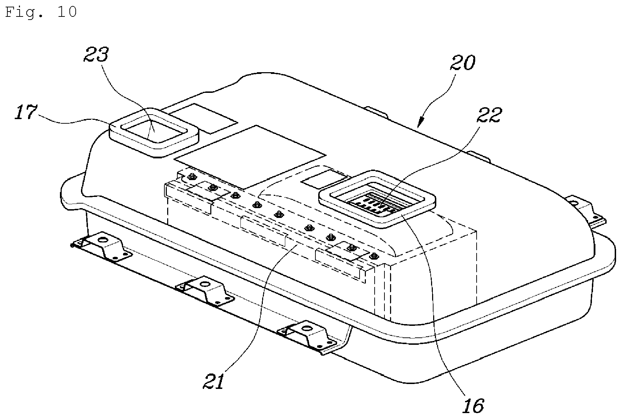

As shown in FIGS. 1 and 2, the battery storage device for the electric vehicle according to the present invention includes a casing 20, an intake duct 30, and a discharge duct 40. The casing 20 is coupled to a lower portion of a vehicle floor 10 to accommodate a battery module 21 therein, and has an air inlet 22 (shown in FIG. 10) into which air for cooling the battery module is introduced, and an air outlet 23 (shown in FIG. 10) from which air used to cool the battery module 21 is discharged. The intake duct 30 is connected to an upper portion of the vehicle floor 10 to communicate with the air inlet 22, and extends indoors to guide indoor air into the casing 20. The discharge duct 40 is connected to communicate with the air outlet 23, and extends indoors or outdoors at a position spaced apart from the intake duct 30 to guide the air used to cool the battery module 21 and thereby discharge the air to an outside of the casing 20.

The casing 20 may have the battery module 21 therein to supply power, and may be separated into upper and lower portions, which are assembled with each other. In addition to the battery module 21, various electric components and a blowing device C for circulating the air are provided in the casing 20. The air inlet 22 into which the air is introduced to cool the battery module 21, and the air outlet 23 from which the air used to cool the battery module 21 is discharged are formed in the casing 20. Thus, when the blowing device C is driven, the air introduced through the air inlet 22 cools the battery module 21, and then is discharged to the air outlet 23. In this regard, the blowing device C may be installed around the air outlet 23, and may use the air circulated in the casing 20 to cool the battery module 21 in an air cooling manner.

Meanwhile, the intake duct 30 may be connected to communicate with the air inlet 22 of the casing 20, and may extend indoors so that the indoor air circulates in the casing 20. Of course, the intake duct 30 may circulate the outdoor air into the casing 20. In the case of the outdoor air, a contamination level is high and an outdoor temperature is varied. The intake duct is formed to circulate indoor air, which is low in contamination level and maintains the temperature of an optimum level, into the casing 20.

The discharge duct 40 is connected to the air outlet 23 of the casing 20 to communicate therewith. The discharge duct 40 extends indoors or outdoors at a position spaced apart from the intake duct 30, and guides the air used to cool the battery module 21 to discharge the air to the outside of the casing 20. Here, the discharge duct 40 may extend outdoors to discharge the air used to cool the battery module 21 to the outside, or may extend indoors to control the internal temperature of the vehicle using the air that is increased in temperature as the battery module 21 is cooled.

As such, the present invention allows the battery module 21 to be cooled in the air cooling manner as the indoor air circulates in the casing 20, through the intake duct 30 and the discharge duct 40 installed in the casing 20.

The above-described component of the present invention will be described in detail. As shown in FIG. 1, a plurality of seats S may be mounted on the vehicle floor 10, the intake duct 30 may extend under a front seat S1 in the vehicle to suction the indoor air, and the discharge duct 40 may extend under or on a side of a rear seat S2 to discharge the air used to cool the battery module 21.

Here, the plurality of seats may be include the front seat S1 and the rear seat S2. The front seat S1 may correspond to a seat of a first row, and the rear seat S2 may correspond to a seat of a second row.

Particularly, since the intake duct 30 is provided under the front seat S1 to suction the indoor air, the indoor air of a low contamination level may be suctioned and interference between a passenger and a structure may be avoided.

The discharge duct 40 extends under or on a side of the rear seat S2 to discharge the air used to cool the battery module 21. Thus, the air discharged through the discharge duct 40 is not transmitted to a passenger, and does not interfere with another structure. Furthermore, the discharge duct 40 is configured such that the air used to cool the battery module 21 is discharged to the inside of the vehicle. Thus, the internal temperature of the vehicle may be controlled by the air that is increased in temperature as the battery module 21 is cooled.

Such a discharge duct 40 may be configured such that the air used to cool the battery module 21 is discharged indoors or outdoors, thus controlling the internal temperature. That is, as shown in FIG. 3, the discharge duct 40 may include a first discharge path 40a that communicates with the air outlet 23 and extends under or on a side of the rear seat S2 to discharge the air to the inside of the vehicle, and a second discharge path 40b that branches off from the first discharge path 40a and extends outdoors to discharge the air to the outside of the vehicle. A regulating valve 40c may be provided at a junction of the first discharge path 40a and the second discharge path 40b. The first discharge path 40a should be configured to discharge the air used to cool the battery module 21 to the inside of the vehicle. Thus, the first discharge path is preferably formed to extend under the rear seat S2.

The regulating valve 40c may be controlled by a controller to selectively move the air used to cool the battery module 21 to the first discharge path 40a or the second discharge path 40b. The controller may collate information about the temperature of the air passing through the battery module 21 and the internal temperature using various sensors to control the regulating valve 40c. Thus, the air that is increased in temperature as the battery module 21 is cooled may be selectively supplied to the inside or the outside of the vehicle depending on the internal temperature, so that the energy efficiency can be improved by selectively using the air that is used to cool the battery module 21.

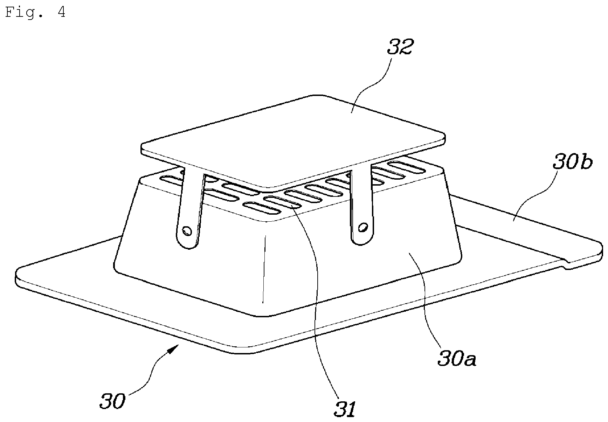

Meanwhile, as shown in FIG. 4, the intake duct 30 may have an inlet port 31 into which the indoor air is introduced. As the intake duct 30 extends under the front seat S1 to be higher than a floor, the inlet port 31 may be located above the floor to be spaced apart therefrom. A mesh structure (not shown) may be applied to the inlet port 31 of the intake duct 30. The inlet port may be provided with a filter (not shown) to filter foreign matter.

In other words, the intake duct 30 may include an edge portion 30a that is coupled to the vehicle floor 10, and a duct portion 30b that extends upwards from a center of the edge portion 30a. The inlet port 31 may be formed on an end of the duct portion 30b, so that the inlet port 31 may be located above the floor to be spaced therefrom. Here, the edge portion 30a of the intake duct 30 may be fastened to the vehicle floor 10 by bolting, and the duct portion 30b may extend to be higher than the vehicle floor 10 in which the front seat S1 is installed.

As such, as the inlet port 31 of the intake duct 30 is spaced apart from the floor, foreign matter and water of the floor are prevented from being introduced into the inlet port 31.

Furthermore, the intake duct 30 may include a cover portion 32 that is located above the inlet port 31 to be spaced apart therefrom and has an area sufficient to cover the inlet port 31. In this way, since the cover portion 32 is spaced apart from the inlet port 31, the inflow of foreign matter can be blocked without interfering with the flow of the air into the inlet port 31. Particularly, as the inlet port 31 of the intake duct 30 is formed to be open upwards, it becomes difficult to introduce air when an obstacle occurs at an upper position. As the cover portion 32 prevents the obstacle from closing the inlet port 31, air may be smoothly introduced through the intake duct 30.

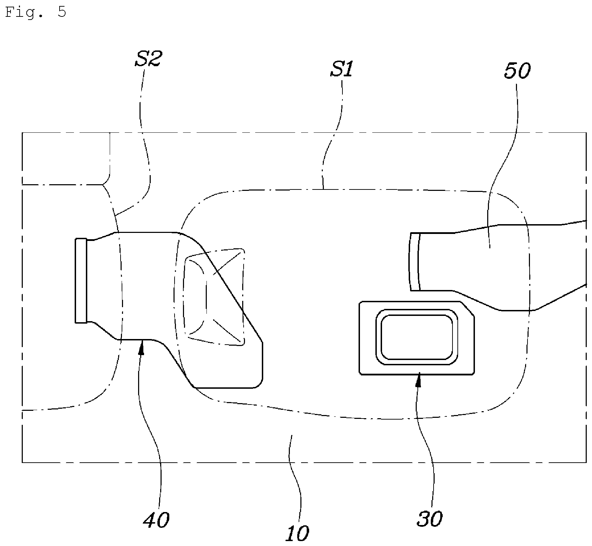

Meanwhile, as shown in FIG. 5, the intake duct 30 may be disposed adjacent to an air conditioning duct 50 that discharges conditioned air to the front seat S1, so that the intake duct 30 may suction the conditioned air. Here, the air conditioning duct 50 may be configured to discharge heating or cooling air to the inside of the vehicle, and may be configured as a separate air conditioner to deliver air from the front seat S1 to the intake duct 30.

Hence, the intake duct 30 may suction clean filtered air that is discharged through the air conditioning duct 50, and may be supplied with the cooling air through the air conditioning duct 50 in conjunction with the air conditioner, thus improving the cooling efficiency of the battery module 21. As such, the intake duct 30 is disposed adjacent to the air conditioning duct 50. Thus, as the conditioned air that is controlled in temperature by the air conditioner is supplied to the intake duct 30, air optimized to control the temperature of the battery module 21 may be introduced into the intake duct 30, thus allowing the temperature of the battery module 21 to be efficiently controlled.

Meanwhile, as shown in FIGS. 5-7, the discharge duct 40 may have a discharge port 41 that is formed to discharge the air used to cool the battery module 21. The discharge port 41 may be formed under or on a side of the rear seat S2 to extend rearwards.

In other words, the discharge duct 40 is formed such that a first end thereof is connected to communicate with the air outlet 23 of the casing 20 and a second end thereof extends under or on a side of the rear seat S2. At the second end, the discharge port 41 is formed rearwards. Since the discharge port 41 of the discharge duct 40 is formed rearwards, air discharged through the discharge port 41 is prevented from being transmitted to a passenger sitting on the rear seat S2. Furthermore, the air that is used to cool the battery module 21 and then is discharged through the discharge port 41 may be naturally discharged from a rear position in the vehicle to the outside thereof. Here, if the discharge duct 40 extends under the rear seat S2, space is provided on both sides of the rear seat S2, thus securing indoor space. If the discharge duct extends on a side of the rear seat S2, space is provided under the rear seat S2, so that it is advantageous for securing a foot insert space for a passenger sitting on a third row seat and designing a seat.

Furthermore, a grill portion 42 having a plurality of holes may be provided in the discharge duct 40 to be installed in the discharge port 41. The holes may be formed by a plurality of ribs that cross the discharge port 41 vertically and horizontally. As such, as the grill portion 42 has the plurality of holes formed by the plurality of ribs, a mesh structure is formed. This may block foreign matter introduced into the discharge port 41 without interfering with the flow of the air discharged through the discharge port 41. Thus, the air circulated through the discharge duct 40 may be smoothly discharged through the discharge port 41, so that it is possible to stably maintain the cooling of the battery module 21.

Meanwhile, as seen from FIG. 1, the discharge path 13 is formed in the vehicle floor 10 under or on a side of the rear seat S2 to communicate with an outdoor side. As the discharge duct 40 extends to communicate with the discharge path 13, the air used to cool the battery module 21 and then discharged through the discharge port 41 may be discharged through the discharge path 13 to the outside.

Here, the discharge path 13 of the vehicle floor 10 is provided under a carpet of the floor to be located under or on a side of the rear seat S2, and extends to the outdoor side. In the discharge duct 40 extending to communicating with the discharge path 13, the discharge port 41 communicates with the discharge path 13, so that the air used to cool the battery module 21 is discharged through the discharge path 13 to the outside. The air that is increased in temperature as the battery module 21 is cooled is discharged to the outside through the discharge path 13, so that the air does not affect indoor temperature and thereby the indoor temperature can be maintained.

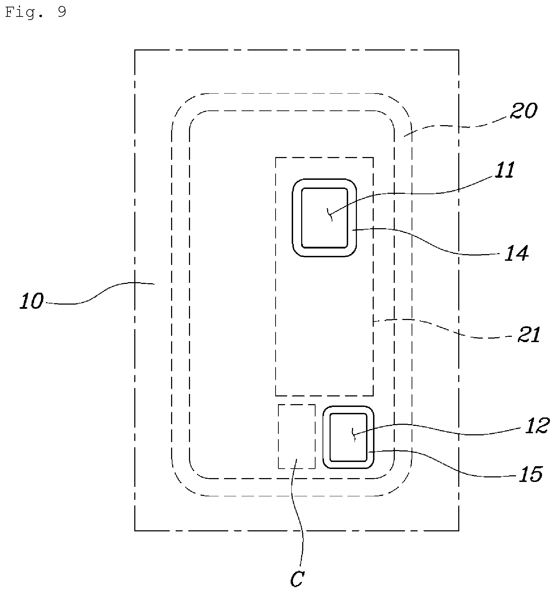

Meanwhile, as shown in FIGS. 1 and 9, the plurality of seats is installed on the vehicle floor 10, and the casing 20 is installed under the vehicle floor 10. An inlet portion 11 and an outlet portion 12 may be formed on the vehicle body. Here, the inlet portion 11 matches with the air inlet 22 of the casing 20 and is open vertically, and the outlet portion 12 matches with the air outlet 23 of the casing 20 and is open vertically.

In other words, indoor space is provided above the vehicle floor 10 to accommodate the plurality of seats S, and external space is provided under the vehicle floor 10, and the casing 20 is installed in the vehicle floor 10, thus making it easy to secure the indoor space and improving maintenability.

Since the inlet portion 11 matching with the air inlet 22 of the casing 20 and the outlet portion 12 matching with the air outlet 23 of the casing 20 are formed in the vehicle floor 10, the intake duct 30 and the discharge duct 40 provided in the upper portion of the vehicle floor 10 are coupled to communicate with the inlet portion 11 and the outlet portion 12, respectively, thus allowing air to circulate in the casing 20. That is, according to the present invention, the battery module 21 in the casing 20 is cooled in the air cooling manner using the indoor air. The intake duct 30 and the discharge duct 40 installed in the upper portion of the vehicle floor 10 allow the indoor air to be circulated in the casing 20 installed under the vehicle floor 10, through the inlet portion 11 and the outlet portion 12 of the vehicle floor 10. Thus, the casing 20 may discharge the indoor air after the indoor air introduced through the intake duct 30 cools the battery module 21 and then cools the battery module 21 again through the discharge duct 40.

Meanwhile, as shown in FIG. 9, a first watertight pad 14 may be provided in the upper portion of the vehicle floor 10 to enclose a circumstance of the inlet portion 11, and the intake duct 30 may be mounted so that the first watertight pad 14 is interposed between the intake duct and the inlet portion 11 of the vehicle floor 10, thus allowing a gap between the intake duct 30 and the vehicle floor 10 to be sealed by the first watertight pad 14. Furthermore, a second watertight pad 15 may be provided in the upper portion of the vehicle floor 10 to enclose a circumstance of the outlet portion 12, and the discharge duct 40 may be mounted so that the second watertight pad 15 is interposed between the discharge duct and the outlet portion 12 of the vehicle floor 10, thus allowing a gap between the discharge duct 40 and the vehicle floor 10 to be sealed by the second watertight pad 15.

Here, each of the first watertight pad 14 and the second watertight pad 15 may be made of an elastically deformable rubber material. The inlet portion 11 and the outlet portion 12 are sealed through the first watertight pad 14 and the second watertight pad 15, respectively.

That is, as the intake duct 30 is mounted so that the first watertight pad 14 is interposed between the intake duct and the inlet portion 11 of the vehicle floor 10, the first watertight pad 14 comes into close contact with the intake duct 30 and the inlet portion 11, thus preventing foreign matter and water on the vehicle floor 10 from entering the inlet portion 11. Furthermore, as the discharge duct 40 is mounted so that the second watertight pad 15 is interposed between the discharge duct and the outlet portion 12 of the vehicle floor 10, the second watertight pad 15 comes into close contact with the discharge duct 40 and the outlet portion 12, thus preventing foreign matter and water on the vehicle floor 10 from entering the outlet portion 12.

Thus, the intake duct 30 and the discharge duct 40 are water-tightly mounted on the vehicle floor 10 through the first watertight pad 14 and the second watertight pad 15, thus preventing foreign matter and water from entering the inlet portion 11 and the outlet portion 12 of the vehicle floor 10 and thereby preventing the battery module 21 from being contaminated.

Meanwhile, as shown in FIG. 10, a third watertight pad 16 is provided on the casing 20 to enclose a circumstance of the air inlet 22. When the casing 20 is mounted in the lower portion of the vehicle floor 10, a gap between the air inlet 22 of the casing 20 and the vehicle floor 10 may be sealed by a third watertight pad 16.

Furthermore, a fourth watertight pad 17 is provided on the casing 20 to enclose a circumstance of the air outlet 23. When the casing 20 is mounted in the lower portion of the vehicle floor 10, a gap between the air outlet 23 of the casing 20 and the vehicle floor 10 may be sealed by the fourth watertight pad 17.

Here, each of the third watertight pad 16 and the fourth watertight pad 17 may be made of an elastically deformable rubber material. The air inlet 22 and the air outlet 23 of the casing 20 are sealed by the third watertight pad 16 and the fourth watertight pad 17, respectively.

As the casing 20 is mounted on the lower portion of the vehicle floor 10, foreign matter and water generated during driving should be prevented from being introduced into the air inlet 22 or the air outlet 23 of the casing 20.

To this end, as the third watertight pad 16 is interposed between the casing 20 and the vehicle floor 10 when the air inlet 22 is mounted on the inlet portion 11 of the vehicle floor 10, a gap between the air inlet 22 of the casing 20 and the inlet portion 11 of the vehicle floor 10 is sealed, thus preventing foreign matter and water from being introduced. Furthermore, as the fourth watertight pad 17 is interposed between the casing 20 and the vehicle floor 10 when the air outlet 23 of the casing 20 is mounted on the outlet portion 12 of the vehicle floor 10, a gap between the air outlet 23 of the casing 20 and the outlet portion 12 of the vehicle floor 10 is sealed, thus preventing foreign matter and water from being introduced.

Since the casing 20 is water-tightly mounted on the lower portion of the vehicle floor 10 through the third watertight pad 16 and the fourth watertight pad 17, the penetration of the foreign matter and the water through the air inlet 22 and the air outlet 23 of the casing 20 is prevented, and consequently the contamination of the battery module 21 is prevented.

Meanwhile, the intake duct 30 extends to suction the indoor air under the front seat S1, and the discharge duct 40 extends to discharge the air used to cool the battery module 21 under the rear seat S2. Thus, in the case of forming an extension portion 60 along the vehicle floor 10, a shock absorbing pad 70 may be provided on the extension portion 60 to absorb shock and vibration.

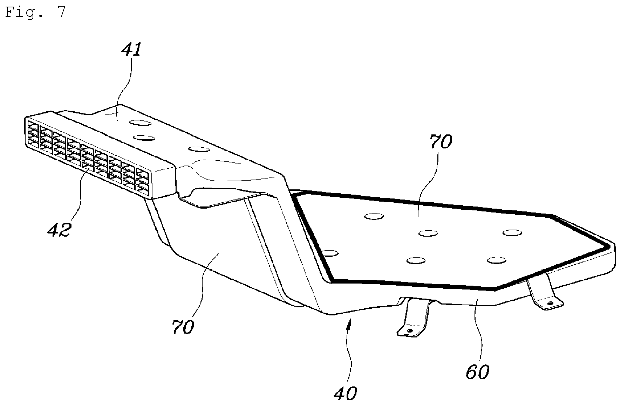

According to the present invention the intake duct 30 extends under the front seat S1, and the discharge duct 40 extends under the rear seat S2. In the present invention, as the casing 20 is disposed on the front side of the vehicle floor 10, the discharge duct 40 extends under the rear seat S2. As seen from FIG. 7, the discharge duct 40 has the extension portion 60 extending along the vehicle floor 10, thus defining a path in which the air used to cool the battery module 21 in the casing 20 is circulated. However, since the extension portion 60 of the discharge duct 40 extends along the vehicle floor 10, vibration and noise may be generated when the air used to cool the battery module 21 is discharged. Therefore, since the shock absorbing pad 70 made of an elastic material to absorb noise and vibration is provided on the extension portion 60, inconvenience caused by noise and vibration is prevented from being transferred to a passenger.

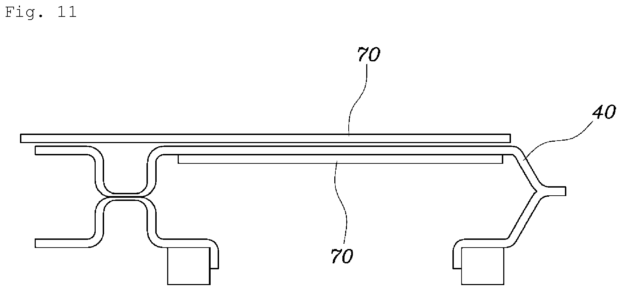

As shown in FIG. 11, the shock absorbing pad 70 may be provided on each of inner and outer sides of the extension portion 60 to extend in a longitudinal direction. Hence, noise and vibration caused by the flow of air passing through the inner side of the extension portion 60 are absorbed by the shock absorbing pad 70, and shock acting on the outer side of the extension portion 60 is also absorbed by the shock absorbing pad 70, so that the durability of the extension portion 60 is ensured.

As described above, the battery storage device for the electric vehicle is configured such that the battery casing 20 is provided under the vehicle floor 10, thus securing the indoor space, and the battery module 21 is cooled using the indoor air, thus simplifying the cooling structure and reducing the manufacturing cost.

Although the present invention was described with reference to specific embodiments shown in the drawings, it is apparent to those skilled in the art that the present invention may be changed and modified in various ways without departing from the scope of the present invention as defined in the appended claims.

## Claims

1. An electric vehicle comprising a battery storage device, the battery storage device comprising:
a casing (20) to be coupled to a lower portion of a vehicle floor (10) to accommodate a battery module (21) therein, the casing (20) including an air inlet (22) into which air for cooling the battery module is introduced, and an air outlet (23) from which air used to cool the battery module is discharged;
an intake duct (30) to be connected to an upper portion of the vehicle floor (210) to communicate with the air inlet (22), the intake duct (30) extending indoors to guide indoor air into the casing; and
a discharge duct (40) connected to communicate with the air outlet (23), the discharge duct (40) extending indoors or outdoors at a position spaced apart from the intake duct (30) to guide the air used to cool the battery module and thereby discharge the air to an outside of the casing,
**characterized in that**
the intake duct (30) extends under a front seat (S1) to suction the indoor air, with an inlet port (31) being formed in the intake duct (30) to suction the indoor air, and the intake duct extends under the front seat (S1) to be higher than the floor (10), so that the inlet port (31) is positioned above the floor (10) to be spaced apart therefrom, and
**in that** the intake duct (30) comprises a cover portion (32) that is located above the inlet port (31) to be spaced apart therefrom and is formed to have an area sufficient to cover the inlet port, so that air is introduced between the inlet port and the cover portion.

2. The electric vehicle of claim 1,
wherein a plurality of seats (S1, S2) is provided on the vehicle floor (10);
wherein the discharge duct (40) extends under or on a side of a rear seat (S2) to discharge the air used to cool the battery module.

3. The electric vehicle of any one of claims 1 to 2, wherein the intake duct (30) is disposed adjacent to an air conditioning duct (50) that discharges conditioned air to the front seat (S1), so that the intake duct suctions the conditioned air.

4. The electric vehicle of any one of claims 1 to 3, wherein the discharge duct (40) extends under the rear seat (S1) to discharge the air used to cool the battery module, and comprises a first discharge path (40a) that communicates with the air outlet and extends under the rear seat to discharge the air to an inside of the vehicle, and a second discharge path (40b) that branches off from the first discharge path (40a) and extends outdoors to discharge the air to an outside of the vehicle, with a regulating valve (40c) provided on a junction of the first discharge path and the second discharge path.

5. The electric vehicle of any one of claims 1 to 4, wherein the discharge duct (40) comprises a discharge port (41) that is configured to discharge the air used to cool the battery module, the discharge port being formed under or on the side of the rear seat (S2) to extend rearwards.

6. The electric vehicle of claim 5,
wherein the discharge path (13) is formed in the vehicle floor (10) under or on the side of the rear seat (S2) to communicate with an outdoor side, and
wherein, as the discharge duct (40) extends to communicate with the discharge path (13), the air used to cool the battery module and discharged through the discharge port (41) is discharged through the discharge path to the outside.

7. The electric vehicle of claim 5 or 6, wherein a grill portion (42) having a plurality of holes is provided in the discharge duct (40) to be installed in the discharge port (41), the holes being formed by a plurality of ribs that cross the discharge port vertically and horizontally.

8. The electric vehicle of any one of claims 1 to 7, wherein the plurality of seats (S1, S2) is installed on the vehicle floor (10), the casing (20) is installed under the vehicle floor, and an inlet portion (11) that matches with the air inlet (22) of the casing and is open vertically, and an outlet portion (12) that matches with the air outlet (23) of the casing and is open vertically are formed.

9. The electric vehicle of any one of claims 1 to 8,
wherein a first watertight pad (14) is provided in the upper portion of the vehicle floor (10) to enclose a circumstance of the inlet portion (11); and
wherein the intake duct (30) is mounted so that the first watertight pad (14) is interposed between the intake duct (30) and the inlet portion of the vehicle floor, allowing a gap between the intake duct and the vehicle floor to be sealed by the first watertight pad (14).

10. The electric vehicle of any one of claims 1 to 9,
wherein a second watertight pad (15) is provided in the upper portion of the vehicle floor (10) to enclose a circumstance of the outlet portion (12); and
wherein the discharge duct (40) is mounted so that the second watertight pad (15) is interposed between the discharge duct and the outlet portion of the vehicle floor, allowing a gap between the discharge duct and the vehicle floor to be sealed by the second watertight pad (15).

11. The electric vehicle of any one of claims 1 to 10, wherein a third watertight pad (16) is provided on the casing to enclose a circumstance of the air inlet (22), so that a gap between the air inlet of the casing and the vehicle floor (10) is sealed by a third watertight pad (16) when the casing is mounted in the lower portion of the vehicle floor, and wherein preferably a fourth watertight pad (17) is provided on the casing to enclose a circumstance of the air outlet (23), so that a gap between the air outlet of the casing and the vehicle floor is sealed by the fourth watertight pad (17) when the casing is mounted in the lower portion of the vehicle floor.

12. The electric vehicle of any one of claims 1 to 11, wherein the intake duct (30) extends to suction the indoor air under the front seat (S1), and the discharge duct (40) extends to discharge the air used to cool the battery module under the rear seat (S2), so that, when an extension portion is formed to extend along the vehicle floor, a shock absorbing pad (70) is provided on the extension portion to absorb shock and vibration.

## Patentansprüche

1. Elektrofahrzeug, umfassend eine Batteriespeichervorrichtung, wobei die Batteriespeichervorrichtung umfasst:
ein Gehäuse (20), welches an einen unteren Abschnitt eines Fahrzeugbodens (10) gekoppelt werden soll, um darin ein Batteriemodul (21) unterzubringen, wobei das Gehäuse (20) einen Lufteinlass (22), in welchen Luft zum Kühlen des Batteriemoduls eingeführt wird, und einen Luftauslass (23) beinhaltet, aus welchem zum Kühlen des Batteriemoduls genutzte Luft abgeführt wird;
einen Ansaugkanal (30), welcher mit einem oberen Abschnitt des Fahrzeugbodens (210) verbunden werden soll, um mit dem Lufteinlass (22) zu kommunizieren, wobei der Ansaugkanal (30) sich innen erstreckt, um Raumluft in das Gehäuse zu leiten; und
einen Abführkanal (40), welcher verbunden ist, mit dem Luftauslass (23) zu kommunizieren, wobei der Abführkanal (40) sich innen oder außen an einer Position erstreckt, welche von dem Ansaugkanal (30) beabstandet ist, um die zum Kühlen des Batteriemoduls genutzte Luft zu leiten und dadurch die Luft zu einer Außenseite des Gehäuses abzuführen,
**dadurch gekennzeichnet, dass**
der Ansaugkanal (30) sich unter einem Vordersitz (S1) erstreckt, um die Raumluft anzusaugen, wobei in dem Ansaugkanal (30) eine Einlassöffnung (31) ausgebildet wird, um die Raumluft anzusaugen, und der Ansaugkanal sich unter dem Vordersitz (S1) erstreckt, um höher als der Boden (10) zu sein, sodass die Einlassöffnung (31) über dem Boden (10) positioniert ist, um davon beabstandet zu sein, und dass
der Ansaugkanal (30) einen Abdeckabschnitt (32) umfasst, welcher sich über der Einlassöffnung (31) befindet, um davon beabstandet zu sein, und so ausgebildet ist, dass er eine Fläche aufweist, die ausreicht, um die Einlassöffnung abzudecken, sodass Luft zwischen die Einlassöffnung und den Abdeckabschnitt eingeführt wird.

2. Elektrofahrzeug nach Anspruch 1,
wobei eine Vielzahl von Sitzen (S1, S2) auf dem Fahrzeugboden (10) bereitgestellt ist;
wobei der Abführkanal (40) sich unter einem oder auf einer Seite eines Rücksitzes (S2) erstreckt, um die zum Kühlen des Batteriemoduls genutzte Luft abzuführen.

3. Elektrofahrzeug nach einem der Ansprüche 1 bis 2, wobei der Ansaugkanal (30) benachbart zu einem Kanal der Klimaanlage (50) angeordnet ist, welcher klimatisierte Luft zu dem Vordersitz (S1) ableitet, sodass der Ansaugkanal die klimatisierte Luft ansaugt.

4. Elektrofahrzeug nach einem der Ansprüche 1 bis 3, wobei der Abführkanal (40) sich unter dem Rücksitz (S1) erstreckt, um die zum Kühlen des Batteriemoduls genutzte Luft abzuführen, und einen ersten Austrittspfad (40a), welcher mit dem Luftauslass kommuniziert und sich unter dem Rücksitz erstreckt, um die Luft in einen Fahrzeuginnenraum abzuführen, und einen zweiten Abführpfad (40b) umfasst, welcher von dem ersten Austrittspfad (40a) abzweigt und sich nach außen erstreckt, um die Luft zu einer Außenseite des Fahrzeugs abzuführen, wobei ein Regelventil (40c) an einem Verbindungspunkt des ersten Austrittspfads und des zweiten Austrittspfads bereitgestellt ist.

5. Elektrofahrzeug nach einem der Ansprüche 1 bis 4, wobei der Abführkanal (40) eine Abführöffnung (41) umfasst, welche konfiguriert ist, um die zum Kühlen des Batteriemoduls genutzte Luft abzuführen, wobei die Abführöffnung unter dem oder an der Seite des Rücksitzes (S2) ausgebildet ist, um sich nach hinten zu erstrecken.

6. Elektrofahrzeug nach Anspruch 5,
wobei der Abführpfad (13) im Fahrzeugboden (10) unter dem oder an der Seite des Rücksitzes (S2) ausgebildet ist, um mit einer äußeren Seite zu kommunizieren, und
wobei, während sich der Abführkanal (40) erstreckt, um mit dem Abführpfad (13) zu kommunizieren, die zum Kühlen des Batteriemoduls genutzte und durch die Abführöffnung (41) abgeführte Luft durch die Abführöffnung zur Außenseite abgeführt wird.

7. Elektrofahrzeug nach Anspruch 5 oder 6, wobei ein Gitterabschnitt (42), welcher eine Vielzahl von Löchern aufweist, in dem Abführkanal (40) bereitgestellt ist, um in der Abführöffnung (41) installiert zu werden, wobei die Löcher durch eine Vielzahl von Lamellen ausgebildet sind, welche die Abführöffnung vertikal und horizontal kreuzen.

8. Elektrofahrzeug nach einem der Ansprüche 1 bis 7, wobei die Vielzahl von Sitzen (S1, S2) auf dem Fahrzeugboden (10) installiert ist, das Gehäuse (20) unter dem Fahrzeugboden installiert ist, und ein Einlassabschnitt (11), welche mit dem Lufteinlass (22) des Gehäuses übereinstimmt und vertikal offen ist, und ein Auslassabschnitt (12), welcher mit dem Luftauslass (23) des Gehäuses übereinstimmt und vertikal offen ist, ausgebildet sind.

9. Elektrofahrzeug nach einem der Ansprüche 1 bis 8,
wobei ein erstes wasserdichtes Polster (14) in dem oberen Abschnitt des Fahrzeugbodens (10) bereitgestellt ist, um einen Umstand des Einlassabschnitts (11) zu umschließen; und
wobei der Ansaugkanal (30) so montiert ist, dass das erste wasserdichte Polster (14) zwischen dem Ansaugkanal (30) und dem Einlassabschnitt des Fahrzeugbodens eingefügt ist, wodurch ein Spalt zwischen dem Ansaugkanal und dem Fahrzeugboden durch das erste wasserdichte Polster (14) abgedichtet wird.

10. Elektrofahrzeug nach einem der Ansprüche 1 bis 9,
wobei ein zweites wasserdichtes Polster (15) in dem oberen Abschnitt des Fahrzeugbodens (10) bereitgestellt ist, um einen Umstand des Auslassabschnitts (12) zu umschließen; und
wobei der Abführkanal (40) so montiert ist, dass das zweite wasserdichte Polster (15) zwischen dem Abführkanal und dem Auslassabschnitt des Fahrzeugbodens eingefügt ist, wodurch ein Spalt zwischen dem Abführkanal und dem Fahrzeugboden durch das zweite wasserdichte Polster (15) abgedichtet wird.

11. Elektrofahrzeug nach einem der Ansprüche 1 bis 10, wobei ein drittes wasserdichtes Polster (16) auf dem Gehäuse bereitgestellt ist, um einen Umstand des Lufteinlasses (22) so zu umschließen, dass ein Spalt zwischen dem Lufteinlass des Gehäuses und dem Fahrzeugboden (10) durch ein drittes wasserdichtes Polster (16) abgedichtet wird, wenn das Gehäuse in dem unteren Abschnitt des Fahrzeugbodens montiert ist, und wobei bevorzugt ein viertes wasserdichtes Polster (17) auf dem Gehäuse bereitgestellt ist, um einen Umstand des Luftauslasses (23) so zu umschließen, dass ein Spalt zwischen dem Luftauslass des Gehäuses und dem Fahrzeugboden durch das vierte wasserdichte Polster (17) abgedichtet wird, wenn das Gehäuse in dem unteren Abschnitt des Fahrzeugbodens montiert ist.

12. Elektrofahrzeug nach einem der Ansprüche 1 bis 11, wobei der Ansaugkanal (30) sich erstreckt, um die Raumluft unter dem Vordersitz (S1) anzusaugen, und der Abführkanal (40) sich erstreckt, um die zum Kühlen des Batteriemoduls genutzte Luft unter dem Rücksitz (S2) abzuführen, sodass, wenn ein Erweiterungsabschnitt ausgebildet wird, um sich entlang des Fahrzeugbodens zu erstrecken, ein stoßabsorbierendes Polster (70) in dem Erweiterungsabschnitt bereitgestellt wird, um Stöße und Vibrationen zu absorbieren.

## Revendications

1. Véhicule électrique comprenant un dispositif de stockage de batterie, le dispositif de stockage de batterie comprenant :
un boîtier (20) à coupler à une partie inférieure d'un plancher de véhicule (10) pour loger un module de batterie (21) dans celui-ci, le boîtier (20) incluant une entrée d'air (22) dans laquelle de l'air pour refroidir le module de batterie est introduit, et une sortie d'air (23) de laquelle de l'air utilisé pour refroidir le module de batterie est évacué ;
un conduit d'admission (30) à raccorder à une partie supérieure du plancher de véhicule (210) pour communiquer avec l'entrée d'air (22), le conduit d'admission (30) s'étendant à l'intérieur pour guider de l'air intérieur dans le boîtier ; et
un conduit d'évacuation (40) raccordé pour communiquer avec la sortie d'air (23), le conduit d'évacuation (40) s'étendant à l'intérieur ou à l'extérieur en une position espacée du conduit d'admission (30) pour guider l'air utilisé pour refroidir le module de batterie et ainsi évacuer l'air vers un extérieur du boîtier,
**caractérisé en ce que**
le conduit d'admission (30) s'étend sous un siège avant (S1) pour aspirer l'air intérieur, un orifice d'entrée (31) étant formé dans le conduit d'admission (30) pour aspirer l'air intérieur, et le conduit d'admission s'étend sous le siège avant (S1) de manière à être plus haut que le plancher (10) de sorte que l'orifice d'entrée (31) soit positionné au-dessus du plancher (10) pour être espacé de celui-ci, et **en ce que**
le conduit d'admission (30) comprend une partie de couvercle (32) qui est située au-dessus de l'orifice d'entrée (31) pour être espacée de celui-ci et est formée pour présenter une surface suffisante pour recouvrir l'orifice d'entrée, de sorte que l'air soit introduit entre l'orifice d'entrée et la partie de couvercle.

2. Véhicule électrique selon la revendication 1,
dans lequel une pluralité de sièges (S1, S2) sont fournis sur le plancher de véhicule (10) ;
dans lequel le conduit d'évacuation (40) s'étend sous ou sur un côté d'un siège arrière (S2) pour évacuer l'air utilisé pour refroidir le module de batterie.

3. Véhicule électrique selon l'une quelconque des revendications 1 à 2, dans lequel le conduit d'admission (30) est disposé adjacent à un conduit de climatisation (50) qui évacue de l'air climatisé vers le siège avant (S1), de sorte que le conduit d'admission aspire l'air climatisé.

4. Véhicule électrique selon l'une quelconque des revendications 1 à 3, dans lequel le conduit d'évacuation (40) s'étend sous le siège arrière (S1) pour évacuer l'air utilisé pour refroidir le module de batterie, et comprend un premier trajet d'évacuation (40a) qui communique avec la sortie d'air et s'étend sous le siège arrière pour évacuer l'air vers un intérieur du véhicule, et un second trajet d'évacuation (40b) qui bifurque du premier trajet d'évacuation (40a) et s'étend vers l'extérieur pour évacuer l'air vers un extérieur du véhicule, une soupape de régulation (40c) étant fournie au niveau d'une jonction du premier trajet d'évacuation et du second trajet d'évacuation.

5. Véhicule électrique selon l'une quelconque des revendications 1 à 4, dans lequel le conduit d'évacuation (40) comprend un orifice d'évacuation (41) qui est configuré pour évacuer l'air utilisé pour refroidir le module de batterie, l'orifice d'évacuation étant formé sous ou sur le côté du siège arrière (S2) pour s'étendre vers l'arrière.

6. Véhicule électrique selon la revendication 5,
dans lequel le trajet d'évacuation (13) est formé dans le plancher de véhicule (10) sous ou sur le côté du siège arrière (S2) pour communiquer avec un côté extérieur, et
dans lequel, comme le conduit d'évacuation (40) s'étend pour communiquer avec le trajet d'évacuation (13), l'air utilisé pour refroidir le module de batterie et évacué à travers l'orifice d'évacuation (41) est évacué à travers le trajet d'évacuation vers l'extérieur.

7. Véhicule électrique selon la revendication 5 ou 6, dans lequel une partie de grille (42) présentant une pluralité de trous est fournie dans le conduit d'évacuation (40) pour être installée dans l'orifice d'évacuation (41), les trous étant formés d'une pluralité de nervures qui croisent l'orifice d'évacuation verticalement et horizontalement.

8. Véhicule électrique selon l'une quelconque des revendications 1 à 7, dans lequel la pluralité de sièges (S1, S2) sont installés sur le plancher de véhicule (10), le boîtier (20) est installé sous le plancher de véhicule, et une partie d'entrée (11) qui correspond à l'entrée d'air (22) du boîtier et est ouverte verticalement, et une partie de sortie (12) qui correspond à la sortie d'air (23) du boîtier et est ouverte verticalement sont formées.

9. Véhicule électrique selon l'une quelconque des revendications 1 à 8,
dans lequel une première garniture étanche (14) est fournie dans la partie supérieure du plancher de véhicule (10) pour entourer une circonstance de la partie d'entrée (11) ; et
dans lequel le conduit d'admission (30) est monté de sorte que la première garniture étanche (14) soit interposée entre le conduit d'admission (30) et la partie d'entrée du plancher de véhicule, permettant à un espace entre le conduit d'admission et le plancher de véhicule d'être scellé par la première garniture étanche (14).

10. Véhicule électrique selon l'une quelconque des revendications 1 à 9,
dans lequel une deuxième garniture étanche (15) est fournie dans la partie supérieure du plancher de véhicule (10) pour entourer une circonstance de la partie de sortie (12) ; et
dans lequel le conduit d'évacuation (40) est monté de sorte que la deuxième garniture étanche (15) soit interposée entre le conduit d'évacuation et la partie de sortie du plancher de véhicule, permettant à un espace entre le conduit d'évacuation et le plancher de véhicule d'être scellé par la deuxième garniture étanche (15).

11. Véhicule électrique selon l'une quelconque des revendications 1 à 10, dans lequel une troisième garniture étanche (16) est fournie sur le boîtier pour entourer une circonstance de l'entrée d'air (22), de sorte qu'un espace entre l'entrée d'air du boîtier et le plancher de véhicule (10) soit scellé par une troisième garniture étanche (16) lorsque le boîtier est monté dans la position basse du plancher de véhicule, et dans lequel de préférence une quatrième garniture étanche (17) est fournie sur le boîtier pour entourer une circonstance de la sortie d'air (23), de sorte qu'un espace entre la sortie d'air du boîtier et le plancher de véhicule soit scellé par la quatrième garniture étanche (17) lorsque le boîtier est monté dans la partie basse du plancher de véhicule.

12. Véhicule électrique selon l'une quelconque des revendications 1 à 11, dans lequel le conduit d'admission (30) s'étend pour aspirer l'air intérieur sous le siège avant (S1), et le conduit d'évacuation (40) s'étend pour évacuer l'air utilisé pour refroidir le module de batterie sous le siège arrière (S2), de sorte que, lorsqu'une partie d'extension est formée pour s'étendre le long du plancher de véhicule, un tampon amortisseur (70) soit fourni sur la partie d'extension pour absorber les chocs et les vibrations.
